# EUROPEAN PATENT APPLICATION

(11) **EP 1 879 186 A1**
(43) Date of publication of application: **16.01.2008**
(21) Application number: 06117033.8
(22) Date of filing: 12.07.2006
(51) Int. Cl.: G11B 7/007, G11B 20/00, G11B 23/28

(54) **Optical data storage medium**

(71) Applicant: DEUTSCHE THOMSON-BRANDT GMBH, 78048 Villingen-Schwenningen (DE)
(72) Inventor: Richter, Hartmut, 78052 Villinge-Schwenningen (DE); Knappmann, Stefan, 78658 Zimmern ob Rottweil (DE)
(74) Representative: Schmidt-Uhlig, Thomas

(57) **Abstract**

The present invention relates to optical data storage medium (1) such as a compact disk or a digital versatile disk. The optical data storage medium (1) comprises an information data area (30) for reading and/or writing data on the medium (1). A security data area (20) is provided for optically storing data, which may not be modified using an optical data storage drive having a laser beam (30) adapted to reading and/or writing the information data area. The security data area (30) is positioned separate from the information data area (20) and the security data area (20) is not writeable by the laser beam (30) of the data storage drive.

## Description

### Technical Field

The present invention relates to an optical data storage medium such as a compact disk (CD), digital versatile disk (DVD) or a BluRay Disk (BD). DVD is an optical disk storage medium format that can be used for data storage including moving pictures with high video and sound quality. DVDs resemble compact disks with regard to their physical dimensions. However, they are encoded in a different format and contain more data. DVDs as well as CDs may be recordable or rewritable. Furthermore, they may contain Video and/or Audio data (DVD-Video and DVD-Audio) as well as data for general use in a computer (DVD-ROM). BluRay Disks represent the most recent optical data storage media having an even greater storage capacity than DVDs. Other types of optical data storage media include High-Density DVDs (HD-DVD) and holographic disks.

### Background of the invention

Since the content on a DVD is usually protected by copyright law, the vendors of DVDs need to protect the DVD against unauthorized duplication or change. Therefore, security keys and/or authentication information is stored on the DVD. Typically the security information is embossed in the disk during disk manufacturing in the factory or recorded after manufacturing the disk. The protection of the DVD is only effective, if the security keys and authentication information may not be modified using conventional DVD drives. Furthermore, the security information should be readable using conventional DVD Drives with no or minimal modifications.

State of the art disks have been designed, which comprise burst cutting areas (BCA). The BCA is a bar code that is individually written to a replicated DVD in the area inside of the lead-in area. The BCA is created by a very powerful laser that burns and darkens the reflective area in the centre of the DVD. Therefore, the BCA is not writeable using conventional DVD-Drives. The conventional DVD-laser may be used for reading the barcode. However, DVD-players need a special decoding circuit in order to read the BCA. A unique code containing up to 188 bytes may be implemented in the BCA in order to provide a copy protection and serialization system.

Instead of the BCA a wobbled bit pattern may be used in order to identify the disk. The International Patent Application WO 2004/006231 A1 discloses such a bit pattern contained in a BluRay disk. The wobble pattern represents security data such as an encryption key value used in encrypting the data in the data area. The pits and lands form a wobbled pattern, which may not be recorded in a general disk driver.

Another known disk security measure is to include an RFID-Chip in the optical data storage medium. Radio Frequency Identification (RFID) is an automatic identification method, relying on storing and remotely retrieving data using devices called RFID tags or transponders. An RFID tag is a small object that can be attached to or incorporated into a product. RFID tags contain silicon chips and antennas to enable them to receive and respond to radio-frequency queries from an RFID transceiver. Passive tags require no internal power source. However, the Optical Disk having the RFID tag may not be identified unless the disk driver comprises an additional RFID transceiver. Furthermore, the RFID-tag may not be rewritten or programmed using an external RFID-transponder. Finally, the RFID-Chip may lead to an excessive eccentricity of the optical data storage medium.

Novel applications of the security and authentication means for DVDs comprise the rental of DVDs to customers. The rental service needs to monitor how long the disk has been rented and authenticate the DVD as property of the rental service. This information is preferably stored on the rented disk itself and must be protected against manipulation by the leaser. Furthermore, the rental service needs to update the information on the disk. However, the additional security information stored in a burst cutting areas (BCA) or RFID tag may not be changed using conventional DVD Drives with no or minimal modifications

### Summary of the invention

It is object of the present invention to provide an optical data storage medium, which comprises recordable or rewritable security information, in particular security keys and authentication information, which may not be modified.

The object is solved by an optical data storage medium such as a compact disk or a digital versatile disk according to claim 1. The optical data storage medium comprises an information data area for reading and/or writing data on the medium. Furthermore, a security data area for optically storing data is provided, which may not be modified using an optical data storage drive having a laser adapted to reading and/or writing the information area. The security data area is positioned separate from the information area and the security data area is only readable by the laser of the data storage drive. Since the security data area is not writeable by the laser of the standard disk drive, the security data can not be modified by the user's disk drive reading the optical data storage medium. Therefore, the user may not change security data.

Preferably, the security area is not accessible by the laser of the standard disk drive at all. In this case, the security area information is unknown to the customer. The main measure against manipulation is the fact that the information is hidden to the user. The user is not inclined to manipulate security data unknown to him.

Preferably, the information data area is accessible for the laser of the data storage drive from a first direction and the security data area is accessible for the laser of the data storage drive from a second direction opposite to the first direction. The optical data storage medium may be a disk having a first surface. The laser of the data storage drive is designated to access the information area through the first surface. The security data area is accessible through a second surface opposite to the first surface. The second surface may be designated to accommodate a label of the disk. Of course, either no label is located above the security data area, or the label is transparent for the wavelength used for accessing the security data. Since regular disk drives may not read data through the label surface of the disk, the security data is hidden from the regular disk drive.

According to a preferred embodiment, the information area is located in an information layer within the optical storage medium and the security data area is located in a security layer within the optical storage medium. If the security layer is provided outside the depth range accessible by a regular disk drive, which is defined by the depths of the standard information layers provided for in the respective standards, such as CD, DVD or BluRay, then the security data is hidden. This effectively prevents it from being read or written by a standard disk drive. In this case, the laser may be pointed onto the storage medium along the same direction for accessing the security data and the information data. The security data is simply hidden by the fact that the disk drive is not accustomed to access information from that layer.

The security layer is preferably positioned in front of the information layer with regard to the direction of access, since a layer closer to the laser-source than the information layer is more likely to be recognized. The part of the optical data storage medium between the security layer and the surface for receiving laser light is transparent for laser light. Therefore, the laser light may access the security data area, when it is directed to the security data area in the direction of access.

Alternatively, the information layer is positioned in front of the security layer with regard to the direction of access. In this case transparency for the laser light is achieved by making sure that the information area is not positioned between the surface designated for receiving the laser light and the security area. Thus, the information area is separated from the security area in such a way, that a laser beam arrives at the security area in the second layer along the direction of access without crossing the information area in the first layer.

According to one embodiment of the present invention, the information area and security area are adapted to be read and/or written using laser light having different wavelengths, e.g. by using different chemical compositions for the information area and the security area. The different optical qualities of the information and security area guarantee that the security area may not be read using the laser for accessing the information area. Also in this case, the security and information areas are located in different regions of the optical data storage medium. In this case, the information area can also be positioned in front of the security area with regard to the direction of access. In this case, the information area must be made transparent for the laser light for the security area, whereas the information area must reflect the laser light for reading the information area. Apparently, the information area and security area in the above example may be interchanged. In this case, the security area must be sufficiently transparent for the laser light used for reading the information area.

A further way for protecting the security area is to provide for a security area adapted to be recorded using a higher recording power than for recording the information area. A standard disk drive may not provide the power for recording the security area. Even if the hidden security area is recognized by the standard disk drive, the security area may not be manipulated by the standard disk drive. This may be accomplished by modifying the security area in such a way that the recording sensitivity is reduced in comparison to the information area.

The optical data storage medium preferably has the shape of a disk with a central opening and a clamping area surrounding the central opening. This corresponds to the standard shape of CDs, DVDs and BluRay disks. The clamping area is designed to be clamped to a turntable of the optical data storage drive in order to rotate the disk during reading and/or writing operations. The security data is positioned within the clamping area of the disk. Since the turntable of the standard optical storage drive covers the clamping area, the standard disk drive may not direct its laser to the security area. It is effectively impossible for the customer to read and/or rewrite the security area. Therefore, the security area is hidden to the customer. The rental service may acquire a disk drive, which does not completely cover the clamping are with a turntable and/or a clamper when reading and/or writing the security area.

Embodiments of the present invention are described hereinafter. The embodiments are intended only to exemplify the present invention. They do not restrict the scope of the invention as defined by the appended claims. It is apparent to the skilled person that the present invention may also be implemented in ways differing from the described embodiments.

### Brief description of the drawings

- Fig. 1: shows a schematic representation of an optical data storage medium according to a first embodiment of the present invention.
- Fig. 2: shows a schematic representation of an optical data storage medium according to a second embodiment of the present invention.
- Fig. 3: shows a schematic representation of optical data storage medium according to a third embodiment of the present invention.
- Fig. 4: shows a schematic representation of optical data storage medium according to a fourth embodiment of the present invention.
- Fig. 5: shows a schematic representation of optical data storage medium according to a fifth embodiment of the present invention.

### Detailed Description

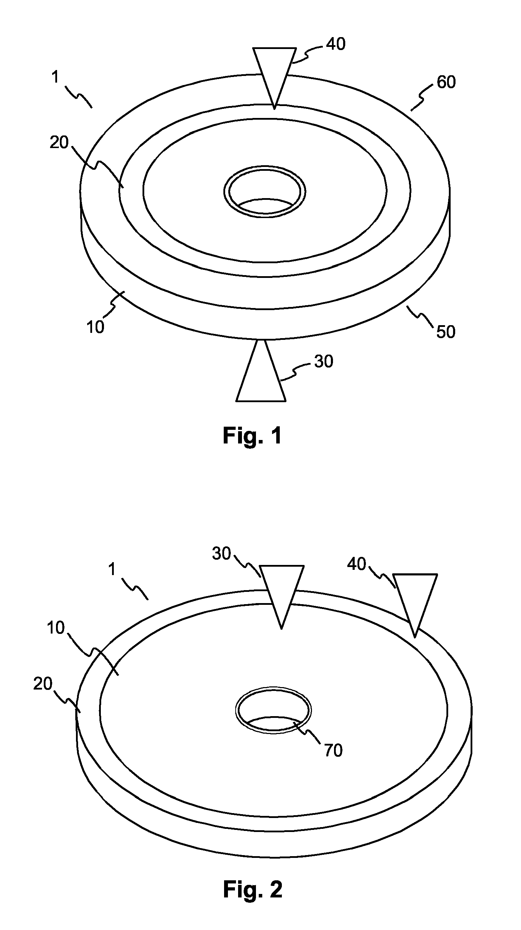

The optical data storage medium 1 shown in Fig. 1 is formed in the shape of a disk. It comprises an information data area 10, which constitutes a layer for storing and retrieving user data. A security data area for optically storing data is designated by reference numeral 20 in Fig. 1. The security data area 20 and the information area 10 are positioned at opposite sides 60 and 50 of the disk. The side 60 constitutes the side, which is designated for carrying a label of the disk 1. The label side 60 is opposed to the data retrieval side 50. The security data area 20 is positioned separate from the information area 10. A focussed laser beam 30 in Fig. 1 is directed to the data retrieval side 50. It may be generated by the standard disk drive (not shown). The security data area 20 is not accessible by the laser beam 30 of the data storage drive, since it is reflected by the information data area. In order to access the security data area a laser beam 40 must be directed to the label side 60 from the opposite direction.

The security area 20 is relatively small in comparison with the information area 10. It covers only a circular segment of the disk, whereas the information area 10 covers essentially most of the disk. The security area 20 may be a pre-recorded, a recordable and/or rewritable data zone. It may be used for storing an encryption key, authentication data or any kind of data, which is not to be accessed by the purchaser of the disk. Preferably a layer stack is used, which has a symmetrical disk structure like DVD. Thereby, the task of providing the additional security area on the label side 60 of the disk is facilitated. Consequently, the manufacturing costs for the disk may be reduced.

A second embodiment of the present invention is shown in Fig. 2. Corresponding features of Fig. 1 and 2 are designated by the same reference numerals. The data storage medium 1 of Fig. 2 comprises an information data area 10 and a security data area 20; the data storage medium is a disk having a circular, central opening 70. The data storage area 10 surrounds the central opening 70. The security area 20 surrounds both the data storage area 10 and the central opening 70. Both the data storage area 10 and the security area 20 are ring-shaped. The ring-shaped security area 20 is preferably positioned close to the outer rim of the disk, e.g. at a radial distance of approximately 57 to 60 mm from the centre of a 120 diameter disk. In a regular disk drive the laser beam 30 for the data storage area 10 cannot access the ring-shaped security area 20, as it lies outside its access range. However, in a special disk drive the laser beam 40 for the security data may access the ring-shaped security area 20 from the same side 70 of the disk 1 as the data storage area 10. The laser beams 30, 40 are either generated by a single light source, i.e. in the special disk drive the laser beam 30 for the data storage area has an increased access range, or by two individual light sources.

Alternatively, the security data area 20 is readable by the laser beam 30 for the data storage area 10 of a regular disk drive. In this case, however, it is not writeable by the laser 30 of the data storage drive. This is achieved by providing differing optical properties for the security area 20. The recording sensitivity of the security area is reduced by modifying the layer stack in this are, e.g. by using a different chemical composition. This results in a higher recording power need for writing data to the security area. This high recording power is not available on commercial, regular disk drives. Consequently, in a special disk drive the source of the laser beam 40 either differs from the source of the laser beam 30, or the high power laser source of the laser beam 40 is also used, with a reduced power, for reading and/ or writing the data storage area 10.

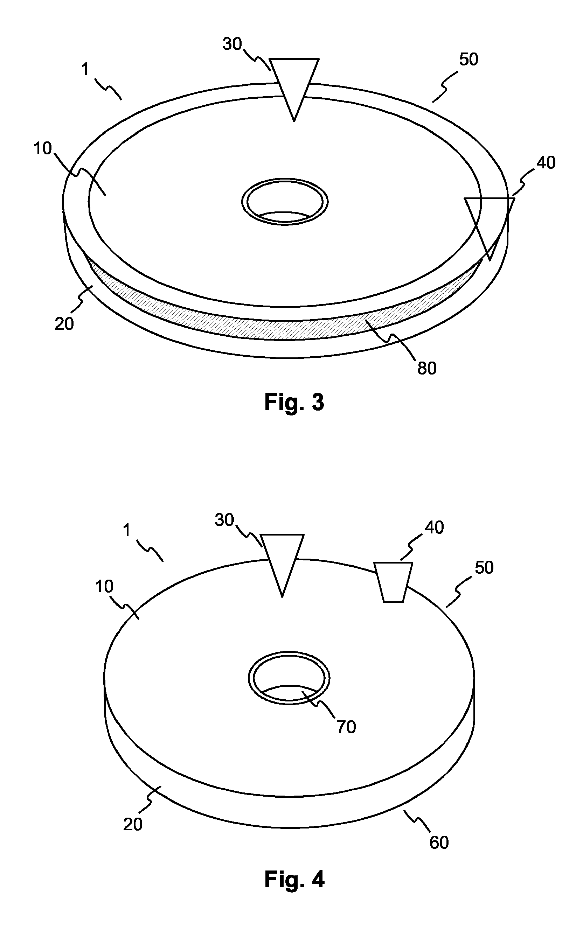

A third embodiment of the present invention is shown in Fig. 3. Corresponding features of Fig. 1, 2 and 3 are designated by the same reference numerals. The arrangement of the information area 10 and the security area 20 resembles to a large extent the arrangement of Fig. 2. However, the security area 20 does not directly surround the information area 10 as in Fig. 2. Instead the security area 20 is provided in a lower layer of the disk shaped optical data storage medium 1. Both the information layer 10 and the security layer 20 are accessed by the respective laser beams 30 and 40 along the direction perpendicular to the surface 50 of the disk. The portion 80 of the disk between the surface 50 and the security layer is made sufficiently transparent for the laser beam 40. Otherwise the security area could not be accessed.

A fourth embodiment of the present invention is shown in Fig. 4. Corresponding features of Fig. 1, 2, 3 and 4 are designated by the same reference numerals. The information area 10 and security area 20 both form ring shaped areas enclosing the central circular opening 70. However, the information 10 and security area 20 are formed in different layers of the disk shaped data storage medium 1. In Fig. 4 the information area 10 is formed on top of the security area 20. The security area 20 is formed close to the label side 60 of the disk, whereas the information area is formed closer to the side 50. The optical data storage medium 1 of Fig. 4 represents a single- or double-sided recordable/rewriteable disk. However, the data layer is accessed using a different wavelength than the wavelength of the laser beam 40 for accessing the security area 20. In this case the information area 10 is highly reflective for the laser beam 30 and essentially transparent for laser beam 40. Therefore, the information area 10 may extend all the way to the edge of the disk and cover the security area 20 contrary to the embodiment of Fig. 3. Since the standard disk drives do not support the different wavelength of the laser beam 40, the security area 20 may neither be read nor written by users.

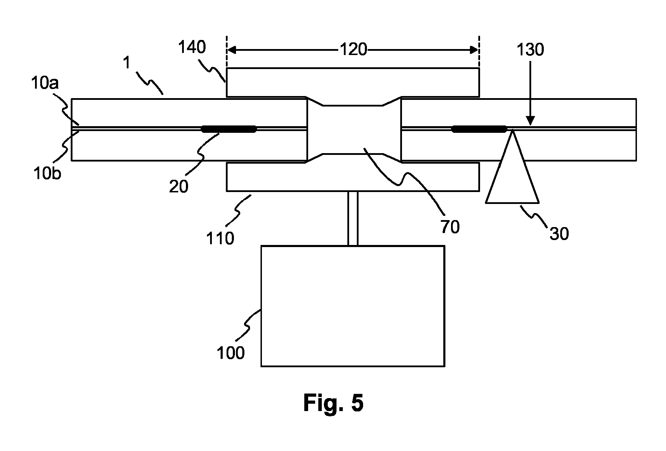

A fifth embodiment of the present invention is shown in Fig. 5. A cross section of an optical data carrier medium 1 is shown, which is clamped by a clamper 140 to the turntable 110 of a standard disk drive. The turntable 110 is driven by a disk motor 100. A security layer 110 is provided in a layer within the cylindrical disk 1. The security layer 110 is ring-shaped and positioned in the vicinity of the central opening 70 of the disk 1. For the most part, the security area 20 is covered by the turntable 110. The covered area of the disk 1 is called the clamping area 120. It is physically impossible for the laser beam 30 of the disk drive to access data in the clamping area 120 of the disk 1. Therefore, this security area 20 is protected from manipulation by users using standard disk drives. The clamping area 120 conventionally covers the area within a radius of 24 mm from the central opening of the disk 1. Reference numeral 130 designates a lead-in area of the disk 1. This is where the information area 10 may start to be recorded. In Fig. 5, two different information areas 10a and 10b are shown. These information areas 10a, 10b lie within different layers of the disk 1.

The most preferable implementations of the present invention have been described herein with reference to the accompanied drawings. It is apparent to the skilled person that ample modifications may be made to the embodiments without departing from the scope of the present invention, which is defined in the accompanied claims.

## Claims

1. Optical data storage medium (1), **comprising**
an information data area (10) for reading and/or writing data on the medium (1) using a laser of a data storage drive,
a writeable or rewriteable security data area (20) for optically storing data, wherein the security data area (20) is positioned separate from the information area (10) and the security data area (20) is not writeable or rewriteable by the laser of the data storage drive.

2. Optical data storage medium according to claim 1, **wherein** the information data area (10) is accessible for the laser of the data storage drive from a first direction and the security data area (20) is accessible for the laser of the data storage drive from a second direction opposite to the first direction.

3. Optical data storage medium according to claims 1 or 2, **wherein** the optical data storage medium (1) has a first surface (50), the laser of the data storage drive being adapted to access the information data area (10) through the first surface (50), and a second surface (60) opposite to the first surface (50), said security data area (20) being accessible through the second surface (60).

4. Optical data storage medium according to claims 1, 2 or 3, **wherein** the information data area (10) is located in an information layer within the optical storage medium (1), and the security data area (20) is located in a security layer within the optical storage medium (1).

5. Optical data storage medium according to claim 4, **wherein** the information and security layers are accessible from the same direction of access and the information layer is positioned in front of the security layer with regard to the direction of access.

6. Optical data storage medium according to claim 5, **wherein** the part of the optical data storage medium (1) between the security layer and the surface (50) for receiving a light beam (40) is transparent for the light beam (40), said light beam (40) being adapted to access the security data area (20), when it is directed to the security data area (20) in the direction of access.

7. Optical data storage medium according to claim 5 or 6, **wherein** the information data area (10) is separated from the security data area (20) in such a way that the light beam (40) arrives at the security data area (20) in the second layer along the direction of access without crossing the information data area (10) in the first layer.

8. Optical data storage medium according to one of the claims 1 to 7, **wherein** the information data area (10) and the security data area (20) are adapted to be read and/or written using light having different wavelengths.

9. Optical data storage medium according to one of the claims 1 to 8, **wherein** the security area is adapted to be recorded using a higher recording power than for recording the information area.

10. Optical data storage medium according to one of the above claims 1 to 9, said optical data storage medium (1) having the shape of a disk with a central opening (70) and a clamping area (120) surrounding the central opening (70), the clamping area (120) being designed to be clamped to a turntable (110) of the optical data storage drive in order to rotate the disk (1) during reading and/or writing operations, **wherein** the security data area (20) is positioned at least partly within the clamping area (120) of the disk (1).

11. Optical data storage drive adapted to read and/or write the security data area (20) of the optical data storage medium (1) according to one of claims 1 to 10.

12. Optical data storage drive for reading from and/or writing to an optical data storage medium (1) having the shape of a disk with a central opening (70) and a clamping area (120) surrounding the central opening (70), the drive having a turntable (110) and a clamper (140) for clamping the clamping area (120) to the turntable (110) in order to rotate the disk (1) during reading and/or writing operations, **characterized in that** the turntable (110) and/or the clamper (140) does not completely cover the clamping area (120) of the disk (1).
